# EUROPEAN PATENT SPECIFICATION

(11) **EP 3 474 565 B1**
(45) Date of publication and mention of the grant of the patent: **07.07.2021**
(21) Application number: 17196847.2
(22) Date of filing: 17.10.2017
(51) Int. Cl.: H04Q 11/00

(54) **DYNAMIC BANDWIDTH ALLOCATION IN OPTICAL NETWORKS**
DYNAMISCHE BANDBREITENZUWEISUNG IN OPTISCHEN NETZWERKEN
ATTRIBUTION DYNAMIQUE DE BANDE PASSANTE DANS DES RÉSEAUX OPTIQUES

(43) Date of publication of application: 24.04.2019
(73) Proprietor: Nokia Solutions and Networks Oy, 02610 Espoo (FI)
(72) Inventor: Fredricx, François F.P.C., 2018 Antwerpen (BE); Dom, Pascal, 2018 Antwerpen (BE); Olaziregi, Nikolas, 2018 Antwerpen (BE)
(74) Representative: IP HILLS NV

(56) References cited:
- CN-A- 101 742 368
- US-A1- 2012 051 371

## Description

### Technical Field

The present invention generally relates to the field of passive optical networks. More particular, it relates to the determining of upstream bandwidth maps for an upcoming time interval in such an optical distribution network.

### Background

An optical distribution network, ODN, refers to an optical communication technology between an optical line terminal, OLT, on the one end and multiple end points on the other end. The end points are typically referred to as optical network units, ONUs, or as optical network terminals, OTUs. An optical distribution network may further be passive in which case it is referred to as a passive optical network or, shortly, PON. In a PON the multi-point connectivity between the OLT and ONUs is realized by unpowered fibre optic splitters. In other words, the optical medium is a shared communication medium in a PON.

The bandwidth of the optical fibre is shared among the ONUs by means of time-division multiplexing, TDM, in downstream and by time-division multiple access, TDMA, in upstream. In upstream, the TDMA bandwidth allocation may be performed dynamically by dynamic bandwidth allocation, DBA. According to DBA, each ONU in a PON is given grants to send upstream bursts of data at specific points in time and for a specific duration thereby avoiding any collision between the bursts from different ONUs. A grant may further be given specifically for certain type of traffic, sometimes referred to as a traffic container or T-CONT.

The grants are then periodically transmitted by the OLT to the ONUs in a bandwidth map, BWmap, message. When applying DBA, the bandwidth maps are typically calculated every DBA cycle. For example, when a BWmap is transmitted every PON frame period of 125µs, then a DBA cycle may be performed every eight frame periods or, thus, every 1ms. In other words, during a DBA cycle, eight bandwidth maps for the next 1ms time period are determined.

A first solution to determine the BWmaps for an upcoming time period is by reactive bandwidth allocation wherein the DBA estimates the data that is to be transmitted during the next time period from observed behaviour in the PON. The observed behaviour may for example comprise the amount of data received from a certain ONU during previous time intervals. Based on the received data, an estimate of the data traffic during the next time interval is then made from which the BWmaps for the ONU are derived. The observed behaviour may also comprise buffer reports from the transmission chains in the ONU. By the amount of data in the buffers, an estimate of the data traffic during the next time interval is then made from which the BWmaps for the ONU are derived.

A second solution to determine the BWmaps is by cooperative DBA, also referred to as pro-active DBA. This solution is disclosed in the ITU recommendation G.989.3, Amendment 3. According to cooperative DBA, the bandwidth needs of communication terminals served by an ONU are signalled in advance to the OLT. This way, the DBA obtains the expected data traffic instead of an estimation of the upcoming data traffic.

CN101742368(A) discloses a bandwidth allocation method, a device and a system in an Ethernet passive optical network, wherein the method comprises the following steps: after an optical line terminal OLT executes bandwidth allocation of the nth cycle, obtaining bandwidth fragments of the nth cycle; counting the bandwidth fragments to the total bandwidth of the (n+1)th cycle, and according to the total bandwidth of the (n+1)th cycle which contains the bandwidth fragments, sending the authorized bandwidth of each ONU in the (n+1)th cycle to corresponding ONU; and cycling the above steps until each ONU accomplishes data transmission, wherein n is a natural number. According to the embodiment of the invention, the bandwidth resource waste phenomenon generated in the bandwidth allocation process can be avoided.

### Summary

A problem with the first solution is that it is not accurate because the DBA performs a prediction based on past observations. This is partially solved by the second solution, but, however, it has been observed that DBA according to the second solution still results in high latencies because data that was scheduled to be transmitted in a certain time period cannot be fully served by the grants in the current DBA cycle and remains in the transmission buffer of the ONU. The data is then only transmitted in the next DBA cycle. This is especially disadvantageous in mobile-fronthaul applications where latency requirements are stringent.

It is an object of the present invention to overcome the above-mentioned problems and to provide a solution for DBA that determines BWmaps in a more accurate way in order to reduce the observed latency issues.

This object is achieved, according to a first aspect, by a device for determining bandwidth maps for an upcoming time interval in an optical distribution network, ODN; and wherein the device is further configured to:
- determine dynamic upstream bandwidth allocations for an optical network unit, ONU, based on expected upstream data bursts during the upcoming time interval; and
- estimate an amount of data that was not transmitted during a preceding time interval resulting from a misalignment in time between upstream data bursts and bandwidth allocations during the preceding time interval; and
- increase one or more of the determined dynamic upstream bandwidth allocations such that transmission of the estimated amount of data is additionally allocated during the upcoming time interval;
- construct the bandwidth maps based on the increased dynamic bandwidth allocations.

A bandwidth map comprises a grant to an ONU for bandwidth, i.e. a bandwidth allocation. A bandwidth allocation may further correspond to a grant to the ONU to transmit data at a certain time for a certain time interval within the upcoming time interval. A bandwidth allocation may also comprise a plurality of grants wherein each grant is dedicated to a different traffic container. By first determining the allocations according to the expected traffic, it is assured that the allocated bandwidth at least corresponds to the traffic demand during the upcoming time interval.

It has been observed that there is a misalignment between the moments that an ONU is granted access to the optical medium and the moments at which transmission data is available in the ONU. Therefore, there is always untransmitted data present in the transmission buffers of the ONU at the end of a DBA cycle. This amount of untransmitted data at the end of the preceding time interval is estimated and also accounted for in the bandwidth allocation for the next time interval by increasing one or more of the already determined upstream bandwidth allocations.

In other words, the DBA is performed such that both the expected data traffic during the upcoming time interval and the remaining buffered data from the preceding time interval is taken into account. This results in a more accurate bandwidth allocation, i.e. an allocation that more accurately reflects the traffic demand during each grant for the ONU. Furthermore, overprovisioning is also avoided because the increased allocation is limited by the estimation of the untransmitted data.

The expected upstream data bursts may correspond to data traffic allocated to networking terminals served directly or indirectly by the ONU. In some use cases of a PON, the ONU will serve other networking terminals located downstream of the ONU. In between the ONU and the networking terminals there may also be intermediate network devices such as a modem device, a gateway, an access point and a femtocell. Such networking terminals are typically also allocated bandwidth by a network entity. Therefore, by taking as the expected upstream data burst this allocated or granted bandwidth, an accurate determination of the first initial bandwidth allocation is obtained.

According to an embodiment, the device is further configured to:
- estimate the amount of data based on buffer state information obtained from the ONU; and/or
- estimate the amount of data based on data received from the ONU during the preceding time interval.

The buffer state information is indicative for how much data is remaining in the transmission buffer or buffers of an ONU. Depending on the time at which this buffer state information is received, this information provides an accurate prediction of the untransmitted data due to the misalignment. Additionally, or alternatively, the amount of data may be based on the data that was actually received by the OLT during the preceding time interval.

Alternatively, or additionally, the device is further configured to estimate the amount of data based on a predefined maximum misalignment in time between upstream data bursts and bandwidth allocations, and based on the upstream data bursts during the preceding time interval.

According to an embodiment, the device is further configured to perform the increasing such that the transmission of the estimated amount of data is allocated uniformly over the upcoming time interval.

This has the advantage that the total bandwidth allocation is evenly distributed. This is a preferred way to allocate the bandwidth when there is not a lot of headroom for the allocation.

According to an alternative embodiment, the device is further configured to perform the increasing such that the transmission of the estimated amount of data is allocated maximumly from the beginning of the upcoming time interval.

This has the advantage that the untransmitted data is transmitted quickly such that new data bursts can be transmitted directly by the ONU. This results in a minimum delay. This is a preferred way to allocate the bandwidth when there is enough headroom for the allocation such that other ONUs do not suffer from the increase in bandwidth.

According to a second aspect, the invention relates to a computer-implemented method for determining bandwidth maps for an upcoming time interval in an optical distribution network, ODN, comprising the following steps:
- determine dynamic upstream bandwidth allocations for an optical network unit, ONU, based on expected upstream data bursts during the upcoming time interval; and
- estimate an amount of data that was not transmitted during a preceding time interval resulting from a misalignment in time between upstream data bursts and bandwidth allocations during the preceding time interval; and
- increase one or more of the determined dynamic upstream bandwidth allocations such that transmission of the estimated amount of data is additionally allocated during the upcoming time interval;
- construct the bandwidth maps based on the increased dynamic bandwidth allocations.

According to a third aspect, the invention relates to a computer program product comprising computer-executable instructions for performing the method according to the second aspect when the program is run on a computer.

According to a fourth aspect, the invention relates to a computer readable storage medium comprising the computer program product according to the third aspect.

According to a fifth aspect, the invention relates to a data processing system programmed for carrying out the method according to the second aspect.

### Brief Description of the Drawings

Fig. 1 illustrates an example of a passive optical network comprising device for determining bandwidth maps according to an embodiment of the invention; and
Fig. 2 illustrates bandwidth maps and data frames exchanged by different terminals in a passive optical network; and
Fig. 3 illustrates bandwidth maps and data frames exchanged by different terminals in the passive optical network of Fig. 1; and
Fig. 4 illustrates steps performed by a device for determining bandwidth maps according to an embodiment of the invention; and
Fig. 5 illustrates a suitable computing system for performing steps according to various embodiments of the invention.

### Detailed Description of Embodiment(s)

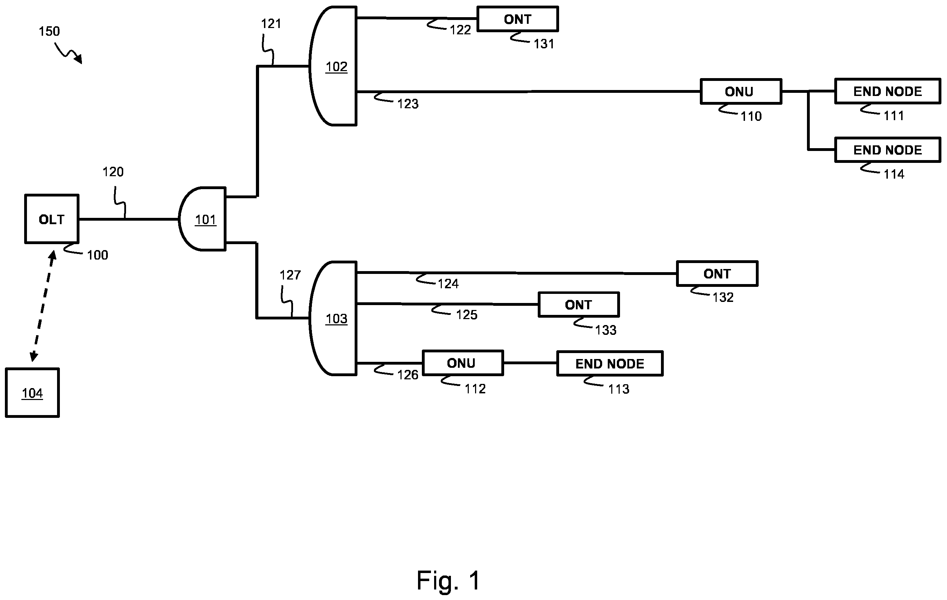

Fig. 1 illustrates an optical distribution network, ODN 150. The ODN 150 further comprises upstream an optical line terminal, OLT 100, and, downstream, optical network units, ONUs 110, 112, and optical network terminals, ONTs 131, 132, 133. The ONTs and ONUs are connected by optical fibres 120-127 and passive optical splitters 101, 102, 103 to the OLT 100 thereby establishing a point to multi-point passive optical network respectively from the OLT 100 to each of the ONTs and ONUs. An ONT is typically installed at a customer premises while an ONU is typically an intermedia node to which various subscribers are connected. The optical communication medium defined by optical fibres 120-127 and splitters 101-103 is a shared communication medium. Downstream data traffic from the OLT 100 to the respective ONTs and ONUs may be scheduled according to time division multiplexing, TDM. In this case, the different ONTs and ONUs receive downstream data traffic from the OLT at different predefined time periods. Upstream data traffic from the respective ONTs and ONUs to the OLT 100 is scheduled by time division multiple access, TDMA. According to TDMA, each ONT and ONU is assigned a time slot within which it is allowed to transmit data to the OLT 100. An ONT or ONU serves as an interface between optical communication signals in the optical distribution network 150 and another communication technology such as for example ethernet or a DSL based communication technology. Therefore, further downstream networking terminals 111, 114, 113 will typically be located further downstream of the ONTs and ONUs. In Fig. 1 this is illustrated by the networking end nodes 111 and 114 connected to the ONU 110 and the networking end node 113 connected to ONU 112. Intermediate network devices may further be situated between networking terminals 111, 114, 113 and the respective ONU 110, 112. Such an intermediate network device may for example correspond to a modem device, a gateway, an access point and a femtocell. Networking terminals 111, 114, 113 may further have their bandwidth allocated by a separate network entity such as for example by network controller 104. The OLT 100 may further serve as an interface between the optical communication network and an upstream access communication network (not shown in Fig. 1). OLT 100 may further be configurable by an external network controller 104. The ODN 150 may for example be a Gigabit-capable Passive Optical Network, GPON, according to the ITU-T G.984 standard, a 10 Gigabit-capable Passive Optical Network, 10G-PON, according to the ITU-T G.987 standard, a 10G symmetrical XGS-PON according to the ITU-T G.9807 standard and a four channel 10G symmetrical NG-PON2 according to the ITU-T G.989 standard. ODN 150 may further be used in mobile-fronthaul application where end nodes 111, 114, 113 correspond to mobile networking terminals such as mobile phones. The mobile-fronthaul application may further be combined with other applications such as applications for residential traffic.

According to embodiments of the invention the TDMA bandwidth allocation is performed dynamically by dynamic bandwidth allocation, DBA. According to DBA, each ONU/ONT in the ODN 150 is given grants to send upstream bursts of data at specific points in time and for a specific duration thereby avoiding any collision between the bursts from different ONUs/ONTs. A grant may further be given specifically for certain type of traffic, sometimes referred to as a traffic container or T-CONT. Depending on the priority type of data traffic, the ONU may assign the traffic to a different traffic container. The grants are then periodically transmitted by the OLT to the ONUs in a bandwidth map, BWmap, message. When applying DBA, the bandwidth maps are calculated every DBA cycle. For example, when a BWmap is transmitted every PON frame period of 125µs, then a DBA cycle may be performed every eight frame periods or, thus, every 1ms. In other words, during a DBA cycle, eight bandwidth maps for the next 1ms time period are determined.

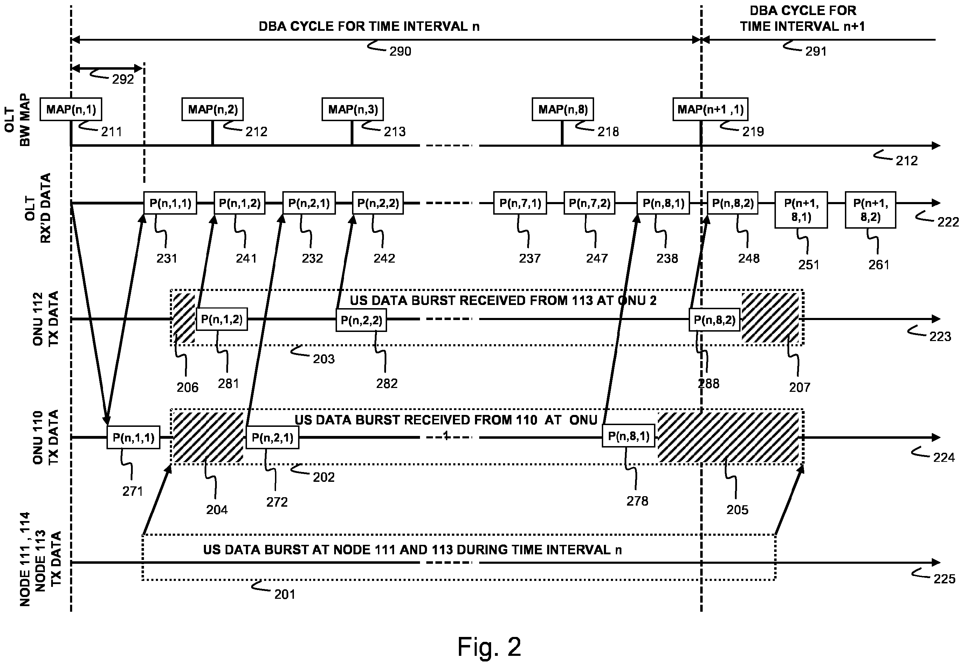

Fig. 2 illustrates a detailed view of the bandwidth allocation in the ODN 150 according to the prior art. The first subplot 212 on the top of Fig. 2 illustrates the bandwidth maps 211 to 218 for a certain time interval n that are subsequently send by the OLT 100. Each of the bandwidth maps comprises a bandwidth allocation for each of the ONUs and ONTs. A bandwidth allocation thereby corresponds to a grant to a respective ONU/ONT to transmit data at a certain moment in time for a certain time period. The second subplot 222 illustrates frames and thus data received at the OLT 100. The frames 231-238 are received from the ONU 110 and the frames 241-248 are received from the ONU 112. The fifth subplot 225 illustrates the upstream data bursts 201 generated at the end nodes 111, 114 and 113 which transmit data to the respective ONUs 110 and 112. Subplot 224 illustrates the receival of the data burst 201 by the dotted line 202. Due to the communication delay between node 111 and ONU 110, receival of the data burst 202 will be delayed with respect to the transmission. Subplot 224 further illustrates the receival of the bandwidth maps 211 to 218 at the ONU 110 by showing time allocations 271 to 278 or grants to the ONU 110 for transmitting data. Due to communication delays in the ODN 150, there will be at least a delay 292 between the transmission of the bandwidth map 211 and the reception of the data 231 according to the allocated bandwidth 271.

By DBA, the bandwidth maps 211 to 218 were determined during the preceding DBA cycle for time interval n-1. However, even if the expected amount of data is identical to the actual amount of data in the upstream data bursts 201, it is still possible that not all data 201 can be transmitted from ONU 110 to OLT 100 within the allocated grants 271-278. This is caused by a misalignment between the data bursts 201 and the allocated bandwidth 271-278 as also illustrated by Fig. 2. A first misalignment is that the data burst 201 has not reached the ONU 110 yet before the first allocated time slot 271. A second misalignment is that the last allocated time slot 278 does not necessarily end at the end of the foreseen time interval n. In other words, even if the ONU receives data portion 205 within the foreseen time interval, it will not be possible to transmit it within the foreseen time slots. The result of these misalignment is that a part of the expected data traffic will remain in the transmission buffer of the ONU110. The data from the burst 201 that was not transmitted according to the foreseen allocated time slots 271-278 is illustrated in Fig. 2 by the shaded portions 204 and 205. This remaining amount of data 204, 205 will then be transmitted during the next DBA cycle, i.e. by allocated time slots granted in the bandwidth maps 219 for the upcoming time interval 291.

A similar misalignment may occur for other ONUs in the ODN 150. This is illustrated by subplot 223 of Fig. 2. There it is assumed that ONU 112 is expected to transmit a same data burst 201 during time interval n. To this purpose, bandwidth allocation maps 211 to 218 for time interval n comprise respective bandwidth allocations 281 to 288. These allocations 281-288 allocated the same amount of bandwidth as allocations 271 to 278 but at different moments in time. The data burst 201 is received at ONU 112 at the same time as at ONU 110, but due to the different allocations 281-288, the amount of data 206 and 207 that is not transmitted in time interval n is different, i.e. smaller in this case. Due to the misalignment, the buffered data will only be transmitted according to the bandwidth maps 219 onwards for the next time interval n+1. Apart from the fact that the expected data is not transmitted within the allocated slot, it is also a problem that this surplus of data 206, 207, 204, 205 will only slowly resolve during the following time intervals.

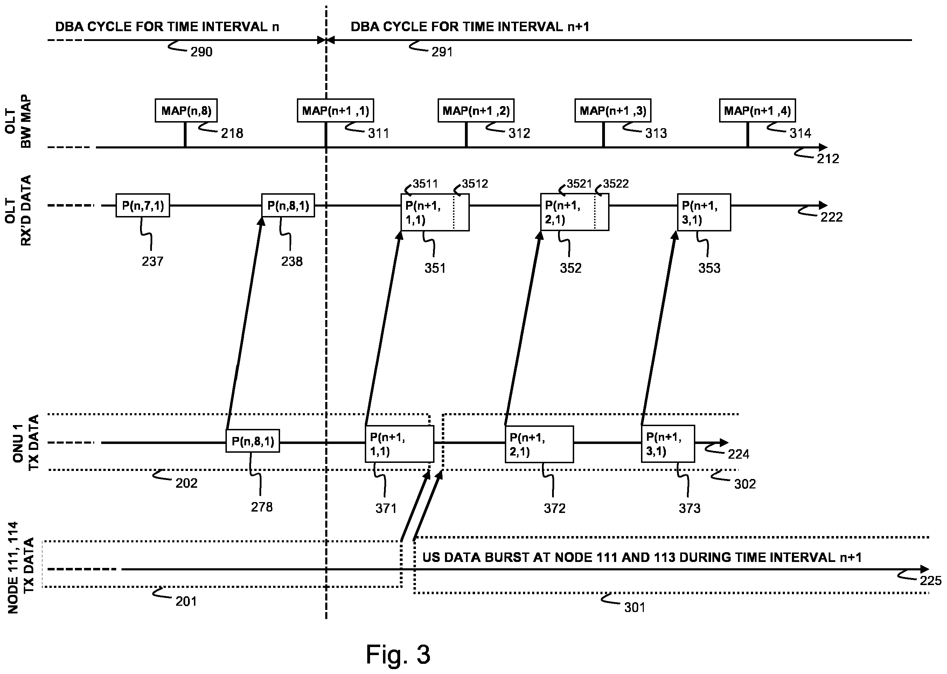

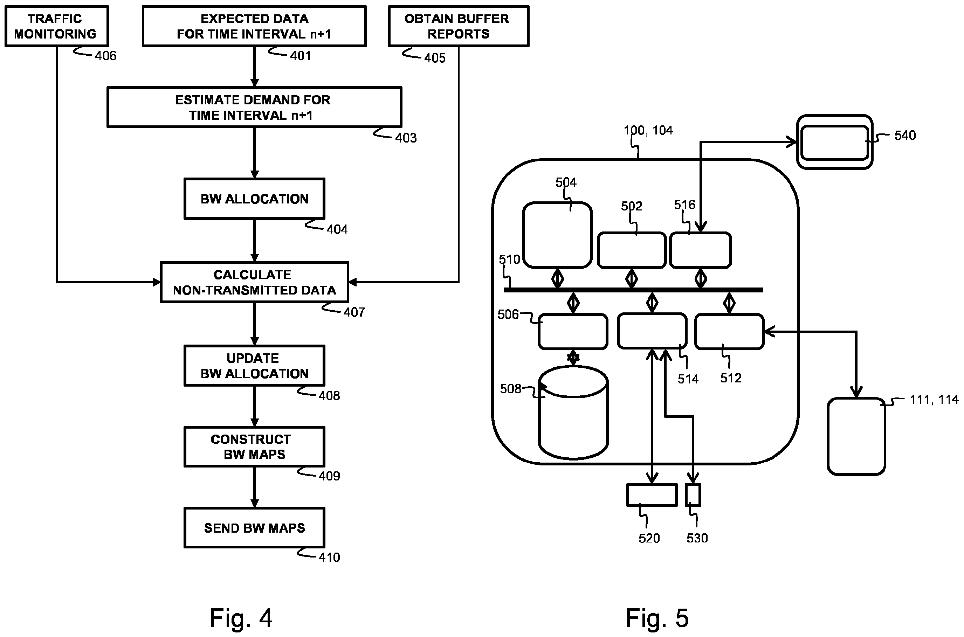

Fig. 4 illustrates steps for dynamic bandwidth allocation according to an embodiment of the invention that overcomes the delays and problems caused by the above identified misalignment. The steps will be further illustrated by reference to Fig. 3. Fig. 3 illustrates the same subplots 212, 222, 224 and 225 as in Fig. 2. The difference with Fig. 2 is that the bandwidth maps 351, 352, 353... for time interval n+1 are determined according to the steps of Fig. 4. The determination of the bandwidth maps for time interval n+1 is performed before the transmission of the first bandwidth map 311. Thereafter, the determination of the bandwidth maps for the next cycle n+2 starts by re-executing the steps of Fig. 4. The steps according to Fig. 4 are thus to be performed iteratively during each DBA cycle.

The steps of Fig. 4 may be performed in the OLT 100 itself or by an external control device 104. In the last case, control device 104 will provide the bandwidth maps to the OLT 100 which, on its turn, will send them to the ONUs and ONTs.

In a first step 401, the expected upstream data traffic 301 for the next time interval n+1 is obtained. For ONU 110, this may be done by obtaining information on upcoming data bursts from terminals 111, 114 that are served by the ONU 110. This information may be retrieved directly by the OLT 100 or by the intermediate network control device 104 that obtains the information and then provides it to the OLT 100 in the form of the expected data traffic for the next time interval n+1. This expected upstream data traffic 301 is then used to estimate the traffic demand by each of the ONUs and ONTs during the next time interval. When the ONUs classify the traffic according to traffic containers, then the traffic is estimated at the OLT 100 for each ONU/ONT and for each traffic container. After this estimation step 403, an estimate of the data 302 in the next time interval is thus obtained.

During the next step 404, a bandwidth allocation for the next time interval is performed based on the estimated upstream traffic, i.e., bandwidth maps are determined such that the estimated traffic can be allocated within the allocated time slots during the next time interval. The bandwidth allocations 3511, 3521, 353 illustrate the result of this intermediate bandwidth allocation step. In other words, steps 401 to 404 are performed according to cooperative bandwidth allocation. As already illustrated in Fig. 2, DBA that is only based on cooperative DBA still results in considerable delays due to the effect of misalignment.

Therefore, the method proceeds to step 407 in which the data that was not transmitted during the previous step is estimated for each ONUs and ONTs. In other words, an estimate is made of the non-transmitted amounts of data 206, 207 for ONU 112 and of data 204, 205 for ONU 110. This estimate may be derived from a traffic monitoring step 406, i.e. by monitoring the amount of data that was received from a respective ONU/ONT during the time interval n by the OLT 100. The difference between the expected data traffic and monitored data traffic during the time interval n may then be taken as an estimation of the non-transmitted data. Alternatively, the estimation may be based on buffered reports received from the respective ONUs and ONTs. The amount of data that remains buffered on the transmission chain of an ONU at the end of time interval n may then be taken as an estimate of the non-transmitted data. Alternatively, the estimation may be based on a worst-case misalignment scenario. Furthermore, the above techniques may further be combined to assure a more robust estimate of the non-transmitted data, for example by taking a weighted average.

Based on the estimate of the non-transmitted data, the bandwidth allocations calculated in step 404 are increased in step 408 such that non-transmitted data is also allocated in the next time interval n+1. This is illustrated in Fig. 3 by the extra time allocations 3512 and 3522 resulting in the updated time allocations 371, 351 and 372, 352. The increasing may further be performed in different ways. A first way is to allocate the non-transmitted data as much as possible to the beginning of the next time interval n+1. This way, buffered data remaining from the previous time interval n is transmitted as soon as possible to the OLT 100 thereby reducing the overall delay in the ODN 150. A second way is to allocate the non-transmitted data uniformly over all time slots of the next time interval n+1.

The method then proceeds to step 409 wherein the bandwidth maps 311, 312, 313, 314... are constructed based on the increased bandwidth allocations. The bandwidth maps are then send in the next step 410 to the ONUs and ONTs during the next time interval 291.

The above steps have been explained with reference to Fig. 2 and Fig. 3 where a DBA cycle is divided into eight, i.e. eight bandwidth maps are transmitted during a single DBA cycle 290. The above method is also applicable for cases with different DBA cycles, i.e. with more or less than eight bandwidth maps.

Fig. 5 shows a suitable computing system 500 according to an embodiment of the invention. Computing system 500 is suitable for performing the steps of Fig. 4. Computing system 500 may therefore serve as a partial implementation of OLT 100 or network controller 104. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems, for example with terminal end nodes 111, 114 and 113. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (100, 104) for determining bandwidth maps (311, 312, 313, 314) for an upcoming time interval (291) in an optical distribution network (150), ODN; and wherein the device is further configured to:
- determine (404) dynamic upstream bandwidth allocations (3511, 3521, 353) for an optical network unit (110), ONU, based on expected upstream data bursts (301) during the upcoming time interval; and
- estimate (407) an amount of data (204, 205, 207) that was not transmitted during a preceding time interval (290) resulting from a misalignment in time between upstream data bursts (201) and bandwidth allocations (271-278, 281-288) during the preceding time interval (290); and
- increase (408) one or more (3511, 3521) of the determined dynamic upstream bandwidth allocations (3511, 3521, 353) such that transmission of the estimated amount of data (204, 205, 207) is additionally allocated (3512, 3522) during the upcoming time interval;
- construct (409) the bandwidth maps (311, 312, 313, 314) based on the increased dynamic bandwidth allocations (351, 352).

2. The device according to claim 1 wherein the expected upstream data bursts comprise data traffic allocated to networking terminals (111, 114) served directly or indirectly by the ONU.

3. The device according to claim 1 or 2 further configured to:
- estimate (403) the amount of data based on buffer state information obtained (405) from the ONU; and/or
- estimate (403) the amount of data based on data received (406) from the ONU during the preceding time interval.

4. The device according to any one of claims 1 to 3 further configured to:
- estimate the amount of data based on a predefined maximum misalignment in time between upstream data bursts and bandwidth allocations, and based on the upstream data bursts during the preceding time interval.

5. The device according to any one of claims 1 to 4 further configured to:
- perform the increasing such that the transmission of the estimated amount of data is allocated uniformly over the upcoming time interval.

6. The device according to any one of claims 1 to 4 further configured to:
- perform the increasing such that the transmission of the estimated amount of data is allocated maximumly from the beginning of the upcoming time interval.

7. A computer-implemented method (100, 104) for determining bandwidth maps (311, 312, 313, 314) for an upcoming time interval (291) in an optical distribution network (150), ODN, comprising the following steps:
- determine (404) dynamic upstream bandwidth allocations (3511, 3521, 353) for an optical network unit (110), ONU, based on expected upstream data bursts (301) during the upcoming time interval; and
- estimate (407) an amount of data (204, 205, 207) that was not transmitted during a preceding time interval (290) resulting from a misalignment in time between upstream data bursts (201) and bandwidth allocations (271-278, 281-288) during the preceding time interval (290); and
- increase (408) one or more (3511, 3521) of the determined dynamic upstream bandwidth allocations (3511, 3521, 353) such that transmission of the estimated amount of data (204, 205, 207) is additionally allocated (3512, 3522) during the upcoming time interval;
- construct (409) the bandwidth maps (311, 312, 313, 314) based on the increased dynamic bandwidth allocations (351, 352).

8. A computer program product comprising computer-executable instructions for performing the method according to claim 7 when the program is run on a computer.

9. A computer readable storage medium comprising the computer program product according to claim 8.

10. A data processing system programmed for carrying out the method according to claim 7.

## Patentansprüche

1. Vorrichtung (100, 104) zum Bestimmen von Bandbreitenkarten (311, 312, 313, 314) für ein bevorstehendes Zeitintervall (291) in einem optischen Verteilungsnetzwerk (150), ODN; und wobei die Vorrichtung ferner zu Folgendem ausgelegt ist:
- Bestimmen (404) von dynamischen Upstreambandbreitenzuteilungen (3511, 3521, 353) für eine optische Netzwerkeinheit (110), ONU, auf Basis von erwarteten Upstreamdatenbursts (301) während des bevorstehenden Zeitintervalls und
- Schätzen (407) einer Menge von Daten (204, 205, 207), die während eines vorherigen Zeitintervalls (290) infolge einer Fehlausrichtung in der Zeit zwischen Upstreamdatenbursts (201) und Bandbreitenzuteilungen (271-278, 281-288) während des vorherigen Zeitintervalls (290) nicht übertragen wurden; und
- Erhöhen (408) von einer oder mehreren (3511, 3521) der bestimmten dynamischen Upstreambandbreitenzuteilungen (3511, 3521, 353) derart, dass eine Übertragung der geschätzten Menge von Daten (204, 205, 207) während des bevorstehenden Zeitintervalls zusätzlich zugeteilt (3512, 3522) wird;
- Konstruieren (409) der Bandbreitenkarten (311, 312, 313, 314) auf Basis der erhöhten dynamischen Bandbreitenzuteilungen (351, 352).

2. Vorrichtung nach Anspruch 1, wobei die erwarteten Upstreamdatenbursts Datenverkehr umfassen, der Netzwerkendgeräten (111, 114) zugeteilt ist, die direkt oder indirekt vom ONU bedient werden.

3. Vorrichtung nach Anspruch 1 oder 2, die ferner zu Folgendem ausgelegt ist:
- Schätzen (403) der Menge von Daten auf Basis von Pufferstatusinformationen, die vom ONU erhalten (405) werden; und/oder
- Schätzen (403) der Menge von Daten auf Basis von Daten, die während des vorherigen Zeitintervalls vom ONU empfangen (406) wurden.

4. Vorrichtung nach einem der Ansprüche 1 bis 3, die ferner zu Folgendem ausgelegt ist:
- Schätzen der Menge von Daten auf Basis einer vordefinierten maximalen Fehlausrichtung in der Zeit zwischen Upstreamdatenbursts und Bandbreitenzuteilungen und auf Basis der Upstreamdatenbursts während des vorherigen Zeitintervalls.

5. Vorrichtung nach einem der Ansprüche 1 bis 4, die ferner zu Folgendem ausgelegt ist:
- Durchführen des Erhöhens derart, dass die Übertragung der geschätzten Menge von Daten gleichmäßig über das bevorstehende Zeitintervall zugeteilt wird.

6. Vorrichtung nach einem der Ansprüche 1 bis 4, die ferner zu Folgendem ausgelegt ist:
- Durchführen des Erhöhens derart, dass die Übertragung der geschätzten Menge von Daten ab Beginn des bevorstehenden Zeitintervalls maximal zugeteilt wird.

7. Computerimplementiertes Verfahren (100, 104) zum Bestimmen von Bandbreitenkarten (311, 312, 313, 314) für ein bevorstehendes Zeitintervall (291) in einem optischen Verteilungsnetzwerk (150), ODN, das die folgenden Schritte umfasst:
- Bestimmen (404) von dynamischen Upstreambandbreitenzuteilungen (3511, 3521, 353) für eine optische Netzwerkeinheit (110), ONU, auf Basis von erwarteten Upstreamdatenbursts (301) während des bevorstehenden Zeitintervalls; und
- Schätzen (407) einer Menge von Daten (204, 205, 207), die während eines vorherigen Zeitintervalls (290) infolge einer Fehlausrichtung in der Zeit zwischen Upstreamdatenbursts (201) und Bandbreitenzuteilungen (271-278, 281-288) während des vorherigen Zeitintervalls (290) nicht übertragen wurden; und
- Erhöhen (408) von einer oder mehreren (3511, 3521) der bestimmten dynamischen Upstreambandbreitenzuteilungen (3511, 3521, 353) derart, dass eine Übertragung der geschätzten Menge von Daten (204, 205, 207) während des bevorstehenden Zeitintervalls zusätzlich zugeteilt (3512, 3522) wird;
- Konstruieren (409) der Bandbreitenkarten (311, 312, 313, 314) auf Basis der erhöhten dynamischen Bandbreitenzuteilungen (351, 352) .

8. Computerprogrammprodukt, das computerausführbare Anweisungen zum Durchführen des Verfahrens nach Anspruch 7, wenn das Programm auf einem Computer ausgeführt wird, umfasst.

9. Computerlesbares Speichermedium, das das Computerprogrammprodukt nach Anspruch 8 umfasst.

10. Datenverarbeitungssystem, das zum Umsetzen des Verfahrens nach Anspruch 7 programmiert ist.

## Revendications

1. Dispositif (100, 104) pour déterminer des cartes de bande passante (311, 312, 313, 314) pendant un intervalle de temps à venir (291) dans un réseau de distribution optique (150), ODN ; et dans lequel le dispositif est en outre configuré pour :
- déterminer (404) des attributions de bande passante en amont dynamiques (3511, 3521, 353) pour une unité de réseau optique (110), ONU, sur la base de rafales de données en amont attendues (301) pendant l'intervalle de temps à venir ; et
- estimer (407) une quantité de données (204, 205, 207) qui n'a pas été transmise pendant un intervalle de temps précédent (290) du fait d'un désalignement temporel entre des rafales de données en amont (201) et des attributions de bande passante (271-278, 281-288) pendant l'intervalle de temps précédent (290) ; et
- augmenter (408) une ou plusieurs (3511, 3521) des attributions de bande passante en amont dynamiques (3511, 3521, 353) déterminées de sorte qu'une transmission de la quantité de données (204, 205, 207) estimée soit attribuée en plus (3512, 3522) pendant l'intervalle de temps à venir ;
- construire (409) les cartes de bande passante (311, 312, 313, 314) sur la base des attributions de bande passante dynamiques (351, 352) augmentées.

2. Dispositif selon la revendication 1 dans lequel les rafales de données en amont attendues comprennent un trafic de données attribué à des terminaux de réseau (111, 114) desservis directement ou indirectement par l'ONU.

3. Dispositif selon la revendication 1 ou 2 configuré en outre pour :
- estimer (403) la quantité de données sur la base d'informations d'état de mémoire tampon obtenues (405) de l'ONU ; et/ou
- estimer (403) la quantité de données sur la base de données reçues (406) de l'ONU pendant l'intervalle de temps précédent.

4. Dispositif selon l'une quelconque des revendications 1 à 3 configuré en outre pour :
- estimer la quantité de données sur la base d'un désalignement temporel maximal prédéfini entre des rafales de données en amont et des attributions de bande passante, et sur la base des rafales de données en amont pendant l'intervalle de temps précédent.

5. Dispositif selon l'une quelconque des revendications 1 à 4 configuré en outre pour :
- réaliser l'augmentation de sorte que la transmission de la quantité de données estimée soit attribuée uniformément sur l'intervalle de temps à venir.

6. Dispositif selon l'une quelconque des revendications 1 à 4 configuré en outre pour :
- réaliser l'augmentation de sorte que la transmission de la quantité de données estimée soit attribuée au maximum depuis le début de l'intervalle de temps à venir.

7. Procédé informatique (100, 104) pour déterminer des cartes de bande passante (311, 312, 313, 314) pendant un intervalle de temps à venir (291) dans un réseau de distribution optique (150), ODN, comprenant les étapes suivantes :
- déterminer (404) des attributions de bande passante en amont dynamiques (3511, 3521, 353) pour une unité de réseau optique (110), ONU, sur la base de rafales de données en amont attendues (301) pendant l'intervalle de temps à venir ; et
- estimer (407) une quantité de données (204, 205, 207) qui n'a pas été transmise pendant un intervalle de temps précédent (290) du fait d'un désalignement temporel entre des rafales de données en amont (201) et des attributions de bande passante (271-278, 281-288) pendant l'intervalle de temps précédent (290) ; et
- augmenter (408) une ou plusieurs (3511, 3521) des attributions de bande passante en amont dynamiques (3511, 3521, 353) déterminées de sorte qu'une transmission de la quantité de données (204, 205, 207) estimée soit attribuée en plus (3512, 3522) pendant l'intervalle de temps à venir ;
- construire (409) les cartes de bande passante (311, 312, 313, 314) sur la base des attributions de bande passante dynamiques (351, 352) augmentées.

8. Produit de programme informatique comprenant des instructions exécutables par ordinateur pour réaliser le procédé selon la revendication 7 lorsque le programme est exécuté sur un ordinateur.

9. Support de stockage lisible par ordinateur comprenant le produit de programme informatique selon la revendication 8.

10. Système de traitement de données programmé pour effectuer le procédé selon la revendication 7.
